(19) **Europäisches Patentamt / European Patent Office / Office européen des brevets**

(11) **EP 1 708 381 B1**

(12) **EUROPEAN PATENT SPECIFICATION**

(45) Date of publication and mention
of the grant of the patent:
**02.06.2010 Bulletin 2010/22**

(51) Int Cl.:
**H04B 7/00** *(2006.01)*  **H04B 7/10** *(2006.01)*

(21) Application number: **05425181.4**

(22) Date of filing: **31.03.2005**

(54) **Cross-polarization transmission system with asynchronous receivers**

Kreuzpolarisationsübertragungssystem mit asynchronem Empfänger

Système de transmission de polarisation croisée avec récepteur asynchrone

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**04.10.2006 Bulletin 2006/40**

(73) Proprietor: **Nokia Siemens Networks S.p.A.**
**20060 Cassina de'Pecchi (MI) (IT)**

(72) Inventors:
• **Bertrando, Fedele Stefano**
**20064 Gorgonzola (IT)**

• **Bianchi, Sergio**
**27100 Pavia (IT)**

(74) Representative: **Weidel, Gottfried**
**Nokia Siemens Networks GmbH & Co. KG**
**COO RTP IPR / Patent Administration**
**80240 München (DE)**

(56) References cited:
**EP-A- 0 902 556    EP-A- 1 339 171**
**EP-A- 1 365 519**

## Description

## FIELD OF THE INVENTION

The present invention relates to the field of radio communications, and more precisely to a cross-polarization transmission system with asynchronous receivers.

## BACKGROUND ART

In radio links schemes where frequency reuse is adopted to double the capacity of the available channel, a stream is transmitted using a given polarization, say "Horizontal (H)", and another stream is transmitted on the same band on a polarization orthogonal to the first one, say "Vertical (V)". Because of the variability of the radio channel a certain degree of interference always exists between the two cross-polarized signals. In application for not particularly disturbed propagations, e.g. largely below 10 GHz, the interference by cross-polarization might be tolerable without specific countermeasures. For radio systems in bands approximately above 10 GHz, the rain is the main limiting factor for the performance of the line-of-sight radio link. The rain is responsible of two impairments: 1) direct attenuation, and 2) depolarization of the transmitted signal. To take into account the effects of depolarization an additional attenuation shall be considered in the power margin calculation. Nevertheless, too high transmission powers are expensive and generate interferences by themselves, so that the introduction of a device called "cross polarization interference canceller" (XPIC) inside each cross-polarization receiver is advantageous as well as recommended in the specifications.

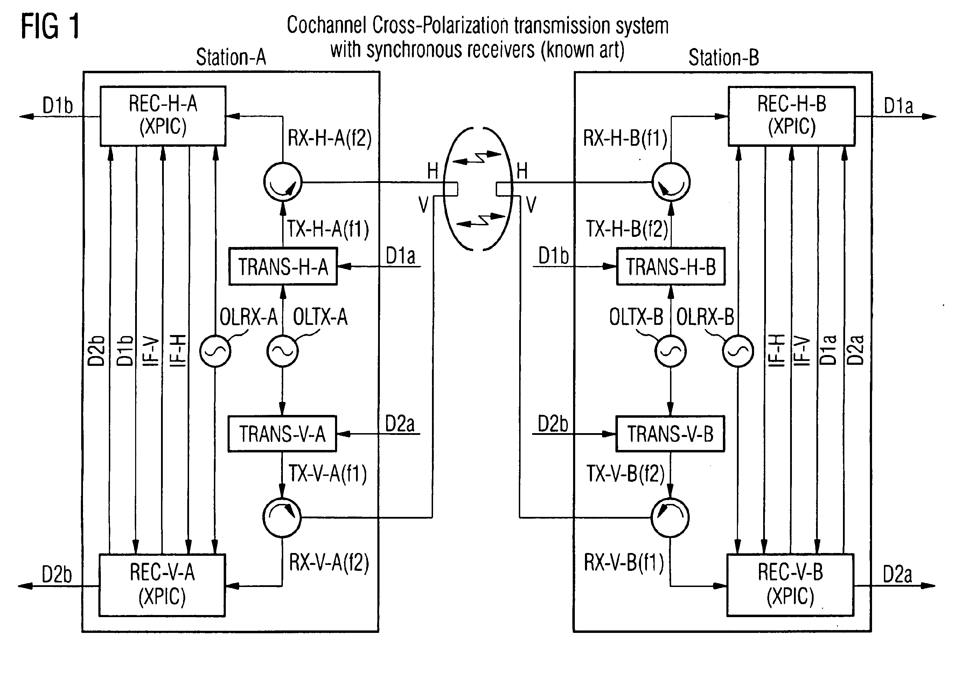

A typical XPIC application is visible in **fig.1.** With reference to the figure, two stations indicated as STATION-A and STATION-B connected by cross-polar cochannel FDD (Frequency Division Duplexing) radio link are depicted. A single antenna with two orthogonal feeders connected to a first port of respective circulators for H/V channel is used inside each station. The two A and B stations are constituted by a first transmission-and-reception section for H-polarized signals, and a second transmission-and-reception section for V-polarized signals. Each H/V-section includes a transmitter and a receiver respectively connected to a second and third port of the H/V circulators. STATION-A transmits on frequency f1 and receives on frequency f2, while STATION-B transmits on frequency f2 and receives on frequency f1. Concerning STATION-A, the H-section comprises a receiver REC-H-A, equipped with a XPIC device, and a transmitter TRANS-H-A; the V-section comprises a receiver REC-V-A, equipped with a XPIC device, and a transmitter TRANS-V-A. Inside station A the couple of transmitters are synchronised by a sinusoidal signal OLTX-A at frequency f1, and the couple of receivers by a sinusoidal signal OLRX-A at frequency f2, generated by respective local oscillators (or derived by a single one). TRANS-H-A transmits a TX-H-A horizontally polarized signal obtained by digitally modulating a carrier at frequency f1. TRANS-V-A transmits a TX-V-A vertically polarized signal (independent of TX-H-A) obtained by digitally modulating a copy of the same carrier. REC-H-A receives a horizontally polarized signal RX-H-A corresponding to a digitally modulated carrier at frequency f2. REC-V-A receives a vertically polarized signal RX-V-A corresponding to a digitally modulated carrier at frequency f2. Concerning STATION-B, dual considerations apply to the transmitters TRANS-H-B and TRANS-V-B, the receivers REC-H-B and REC-V-B, the local oscillator signals OLTX-B and OLRX-B, the transmitted signals TX-H-B and TX-V-B, and the received signals RX-H-B and RX-V-B. D1a and D2a indicate two digital streams (DATA) at the inputs of STATION-A to be respectively transmitted with horizontal and vertical polarization. Similarly, D1b and D2b indicate two digital streams (DATA) at the inputs of STATION-B. Signals D1a, D2a and D1b, D2b are the ones further indicated at the outputs of the receivers of the destination STATION-B and STATION-A, respectively. For a correct cross-polar interference cancellation the two synchronized receivers of Station A exchange the following signals: IF-H, IF-V at intermediate frequency and D1b, D2b in base band. Similarly, IF-H, IF-V and D1a, D2a are exchanged between the two receivers of station B. Due to the complete symmetry of the system architecture, a receiver only (e.g. REC-H-B) is needed to the aim of describing the XPIC interconnection.

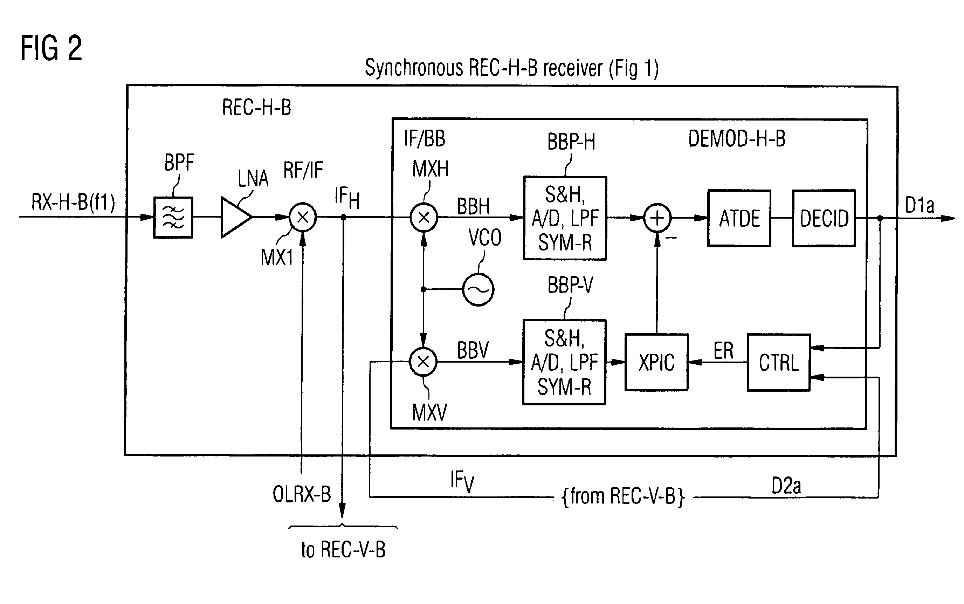

With reference to **fig.2**, the receiver REC-H-B includes an image filter BPF (with bandpass centred at f1) at the input of the RF signal RX-H-B. The filter BPF is followed by a low-noise amplifier LNA and a mixer MX1 operated by the local oscillator signal OLRX-B to perform the RF/IF conversion. The intermediate frequency $IF_H$ signal at the output of MX1 is filtered (not shown) and forwarded to a demodulator DEMOD-H-B and to a second demodulator of the second receiver REC-V-B (fig. 1). Signal $IF_H$ and a companion intermediate frequency signal $IF_V$ coming from REC-V-B reach an input of respective mixers MXH and MXV inside demodulator DEMOD-H-B to be multiplied by a sinusoidal IF signal at the other input generated by a VCO (Voltage Controlled Oscillator) which schematizes a carrier recovery circuit. Two analog baseband signals BBH and BBV at the output of mixers MXH and MXV are sent to two respective blocks BBP-H and BBP-V to be submitted to the following sequential operations: sampling at twice the symbol frequency, analog-to-digital conversion, low-pass digital filtering by an optimum filter matched to the transmitted pulse, and recovery of the symbol synchronisation. Digital signal at the output of block BBP-V crosses an XPIC device and reaches the input (-) of a two-input adder, whose other input (+) is reached by digital signal at the output of block BBP-H. The signal at the output of the adder crosses a block ATDE (Adaptive Time Domain Equaliser) and reaches a decision block DECID which outputs an estimation of data D1a transmitted with horizontal polarization. Data D1a from REC-H-B and data D2a coming from REC-V-B (fig.1) are sent to a control block CTRL which generates an error signal ER directed to the XPIC. The latter is an equalizer similar to an ATDE (Adaptive Time Domain Equalizer) implemented by a FIR transversal filter with variable coefficients adjusted by the feedback error ER, so as to cancel the cross-polar interference at the output of the adder. A very good cancellation is possible by the fact that cross-polar interference is synchronized to the main signal thanks to the unique VCO. In this case the XPIC device is the ideal countermeasure against the interference from orthogonal polarization. XPIC is essential when the modulation format employed in the cochannel system is more complex, for example, than 32TCM; because in this case the system is too sensible to the interference from the orthogonal polarization.

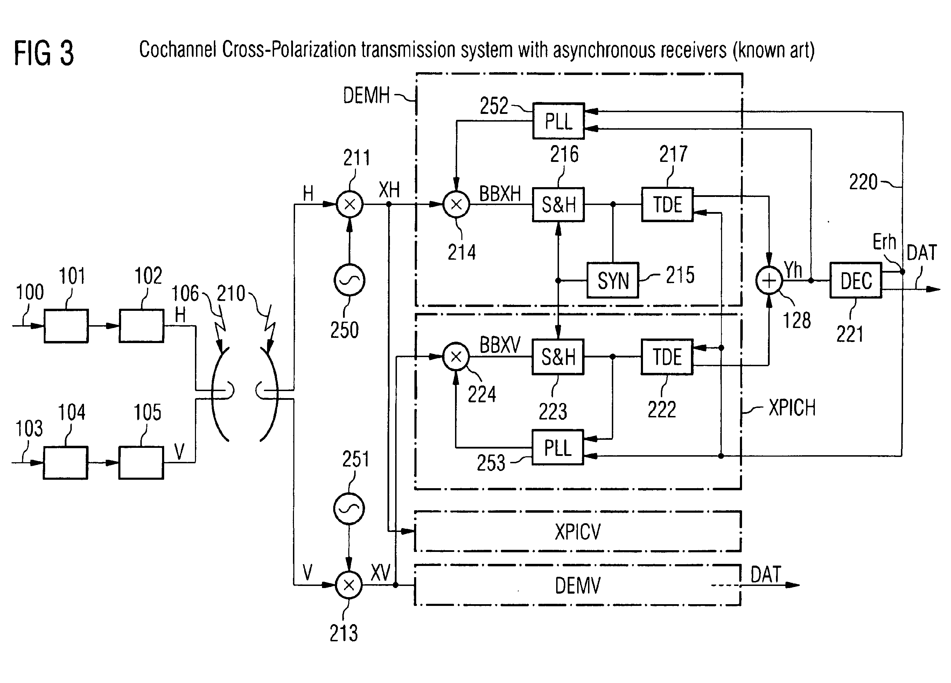

Situations exist in which the constraint of an unique VCO should involve hard modifications of the existing equipments. For example, when an orthogonally polarized link is added to an existing one for doubling the channel capacity due to an increased service demand. In such a case the replacement of the old radio shelf with a new one containing the two receivers is preferable especially if the receivers are installed outdoor behind the antenna,. The European patent application EP 1365519 A1, titled: "Interference erasing system with independent receivers", in the name of SIAE Microelettronica S.p.A. (Italy), teaches how adding a cross-polar receiver without modifying a formerly installed one. **Fig.3** is a representation of the double polarization system of the cited invention taken by the original **fig.2.** With reference to **fig. 3,** we see on the left part of the figure two transmission branches connected to the two feeders of an antenna 106 for H and V polarizations. The two branches for digital data 100 and 103 respectively include two modulators 101 and 104 and two transmitters 102 and 105. In the remaining part of the figure an antenna 210 with two receiving feeders for H and V polarizations connected to a respective couple of demodulators DEMH + XPICH and DEMV + XPICV is represented. The front-end part includes two RF/IF converters 211, 213 controlled by different local oscillators 250, 251 asynchronous to each other to obtain two IF signals XH and XV respectively for H and V polarizations. This front-end part together with either a DEMH + XPICH or DEMV + XPICV couple have been ideally included in an unique (claimed) demodulation system of a first signal, not necessarily polarized, interfered by a second signal, in such a way that the addition of a second receiver does not require constraints between the two receivers. The only top branch DEMH + XPICH for horizontal polarization is detailed in **fig.3** because the couple DEMV + XPICV is similar. The XH signal at IF is applied in succession to a mixer 214, a sampler 216, an equalizer 217, and an adder 218. The IF signal XV is applied in succession to a mixer 224, a sampler 223, an equalizer 222, and to the adder 218. The output of the adder 218 is applied to a decider 221 that provides the estimated data 220 and an estimation error Erh that is applied to the input of a carrier recovery circuit 252 (similar to a PLL) together with a signal Yh available at the output of the adder 218. The carrier recovered at the output of the PLL 252 is driving the mixer 214 for obtaining an analog baseband signal BBXH. A circuit 215 for symbol synchronization recovery takes the signal at the output of the sampler 216 and drives the samplers 216 and 223. The estimation error Erh is also applied to another carrier recovery circuit 253 (PLL) for the phase synchronization recovery, and to the equalizers 222 and 217. At the input of PLL 253 is also applied the output of the sampler 223. The output of the PLL 253 drives the mixer 224 for obtaining an analog baseband signal BBXV. The blocks 214, 215, 216, 217, and 252 constitute the demodulator DEMH. The blocks 224, 223, 222, and 253 constitute the XPIC. In operation, the second carrier recovery circuit inside the XPIC is synchronized to the error Erh detected on the main branch, this allow a synchronization of the cross-polar interference with the main signal and hence the complete cancellation of this type of interference at the output of the adder node 218. Performances comparable with the ones of the synchronous receivers are reached. Furthermore the baseband estimated signals (see fig.1: D1a, D2a and D1b, D2b) are not more necessarily exchanged between the two receivers of a same station.

## OUTLINED TECHNICAL PROBLEM

The interference erasing system disclosed in EP 1365519 A1 suffers of some limitations as the carrier and phase synchronization recovery of the input signals (both main and interfering) are concerned. In particular, two control loops are used for these aims in each receiver schematized in **fig.3.** The loops run over completely baseband paths. Each path starts from the insertion point of the calculated error (Erh), forwards to an analog mixer (214, 224) used for IF to baseband conversion, and terminates at the comparison point (inside the CR circuits 252, 253) between the reconstructed frequency/phase and the frequency/phase of the input signals. The main drawback of this technical solution is the "length" of the synchronization loops or in equivalent words the remarkable delay along the loops. As known, the longer the delay the narrower its operational band. In practice, the CR circuits 252 and 253 behave as two PLLs, and the selection of the bandwidth in a PLL involves a trade-off between speed of response and noise in the phase estimate. The narrow-band solution of the prior art puts in foreground the second aspect with detriment of the first, but this approach could introduce some drawbacks in the operation of the receivers. As known, the radiofrequency local oscillators are subjected to sudden frequency jumps due to mechanical stresses in their inside during environmental thermal cycles. Independently of frequency jumps, the radiofrequency oscillators also suffer of phase noise localized around the carrier. Frequency jumps inside the PLLs generate a transitory behaviour of the phase error function lasting inversely to the bandwidth of the PLL. Long transitory periods due to underdamped responses have the serious possibility of driving the PLL unlocked, with the further drawback that narrowband PLLs are slow to recover from the unlock condition.

Very stable and expensive local oscillators should be used in the asynchronous receivers of the cited art to compensate for the reduced capability of the PLLs to absorb sudden frequency jumps without unlocking. Besides, additional complexity is needed to recover from unlock, as expressly indicated in the variant (see original fig.3) of the citation in which three different types of error are calculated for reducing the duration of the hysteresis between unlock and successive re-lock driven by the fading of Rayleigh.

## OBJECTS OF THE INVENTION

In view of the described state of the art, it is an object of the present invention to provide a cross-polarization transmission system without constraint between the two receivers, including wideband recovery loops able to support larger frequency jumps of the carrier without running into demodulation errors, and with increased tolerance to the local oscillator phase noise.

## SUMMARY AND ADVANTAGES OF THE INVENTION

The invention achieves said object by providing a cross-polarization transmission system comprising two transmitters of signals orthogonally polarized on a common frequency channel and two receivers for receiving a respective one of said signals mutually interfering on the channel, as disclosed in claim 1.

According to the present invention each receiver includes:

- a frequency converter controlled by a local oscillator for down-converting the reception signal from radiofrequency to a predetermined band;
- a first equalizer in cascade to said first frequency converter;
- a second equalizer for receiving an asynchronous interferent signal in said predetermined band from the companion receiver;
- a first multiplier in cascade to said second equalizer;
- subtraction means for subtracting the output signal of said first multiplier from the output signal of said first equalizer;
- a second multiplier in cascade to said subtraction means;
- a decider circuit in cascade to said second multiplier for providing an estimate of the transmitted signal and a signal corresponding to the square error of said estimate compared to the ideal value;

- a first carrier recovery circuit for receiving the output signal of said second multiplier and said signal corresponding to the square error and providing a signal to said second multiplier and to a phase inverter;
- a third multiplier in cascade to said phase inverter and further receiving said signal corresponding to the square error;
- a second carrier recovery circuit for receiving the output signal of said third multiplier and a signal coming out from said second equalizer and providing a signal to said first multiplier.

According to the present invention a sampler is placed upstream each equalizers and a quantizing unit followed by an analog-to-digital converter is cascaded to each sampler.

According to the present invention the sampler used to sample the main signal is looped with a circuit for the recovery of symbol synchronization which controls the sampler of the interferent signal.

Other object of the present invention is that to provide a method for receiving orthogonally polarized signals mutually interfering on a common frequency channel, as disclosed in the independent method claim.

The proposed invention postpones at the output of the summation node the carrier recovery on the main signal path and at the input of the summation node the carrier recovery on the interfering path. In respect of the prior art, where the carrier recovery is performed during the conversion from RF to IF of both the main and the interfering signals, the proposed innovation suggests to lock the carrier phase directly in baseband or in a predetermined band nearby the baseband acting upon the interference-free signal. This freedom is consequent to: a) both symbol recovery and equalization can be performed also without a perfect synchronization to the carrier; b) the insertion of the two recovery loops immediately after the summation node and just before it allows the two equalizers, in case of need, to work also outside the baseband; c) baseband equalizers are known (see Proakis, Chapter 10.2.5). Bandpass equalizers is an additional feature in respect of the cited prior art where the two carrier recovery loops only allow baseband equalizers.

The aforementioned technical characteristics of the receiver according to the invention allow to implement very shorter, and faster, and completely digital synchronization loops. The different synchronization approach also needs a different approach to synchronize the interference estimated by the XPIC with the actual interference present in the main signal. As said above, the proposed solution is adapted to insert an additional synchronization loop in the path of the interfering signal immediately before the cancellation node. In this way, the second loop is also shorter and faster and completely digital. The two synchronization loops have the additional features to be more stable and less noisy in respect of the prior art and the capability to absorb large frequency jumps. Due to these features, less severe specifications for the oscillators and mixers are required with the advantage that less expensive devices can be used.

Generally speaking, a cross-polarization receiver designed according to the present invention and one of the prior art of fig.3 are both realizable either in analogue or digital forms using well known functional blocks. But this is the only consideration in common between them, because the architecture of the two receivers diverges since from the first down-conversion: synchronous in the prior art receiver and asynchronous in the receiver of the invention. Furthermore, differently from the prior art, the carrier recovery loop and the interference synchronization loop are now completely realizable in digital fashion. Valid theoretical arguments helpful to design the main functional blocks of the receiver are given in the book of John G. Proakis, titled: "Digital Communications", Fourth Edition, year 2001, published by Mc-Graw-Hill, ISBN 0-07-232111-3.

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

- **fig.1,** already described, shows the general diagram of a cochannel cross-polarization transmission system with synchronous receivers according to the prior art;
- fig.2, already described, shows the internal structure of a block REC-H-B included in the diagram of fig.1;
- **fig.3**, already described, shows the general diagram of a cochannel cross-polarization transmission system with asynchronous receivers according to the nearest prior art;
- **fig.4a** and **4b** show the general diagram of a cochannel cross-polarization transmission system with asynchronous receivers according to the present invention;
- **figures 5** and **6** show two simplified mathematical models of the receivers of fig.4a and 4b;
- **fig.7** shows a channel model used by a simulator used to evaluate the performances of an asynchronous receiver of the invention;
- **figures 8a, 8b, 8c** and **9a, 9b, 9c** show some curves of the simulation results for two C/I values.

## DETAILED DESCRIPTION OF AN EMBODIMENT OF THE INVENTION

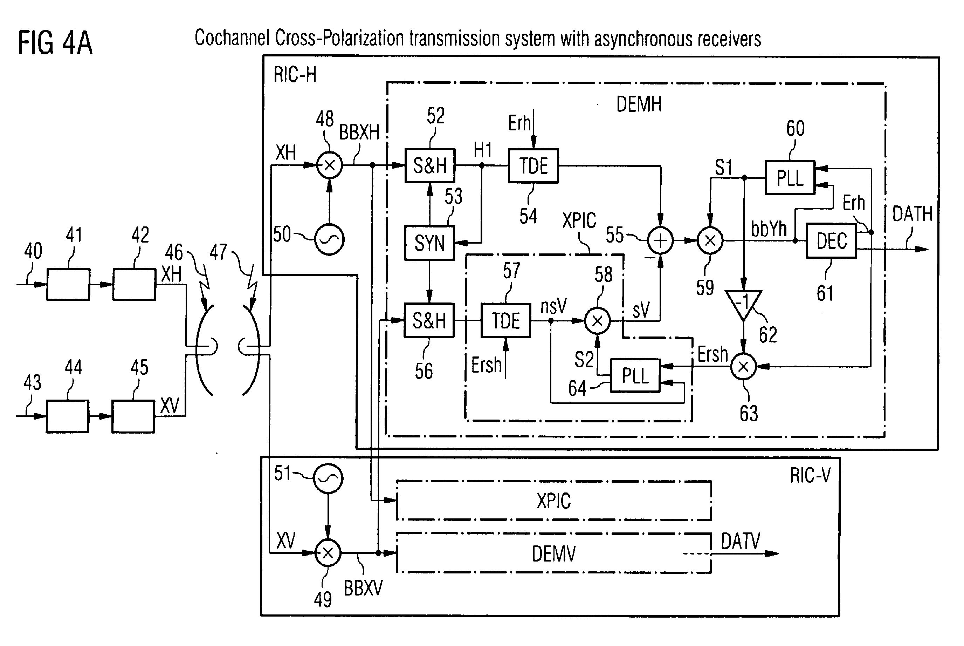

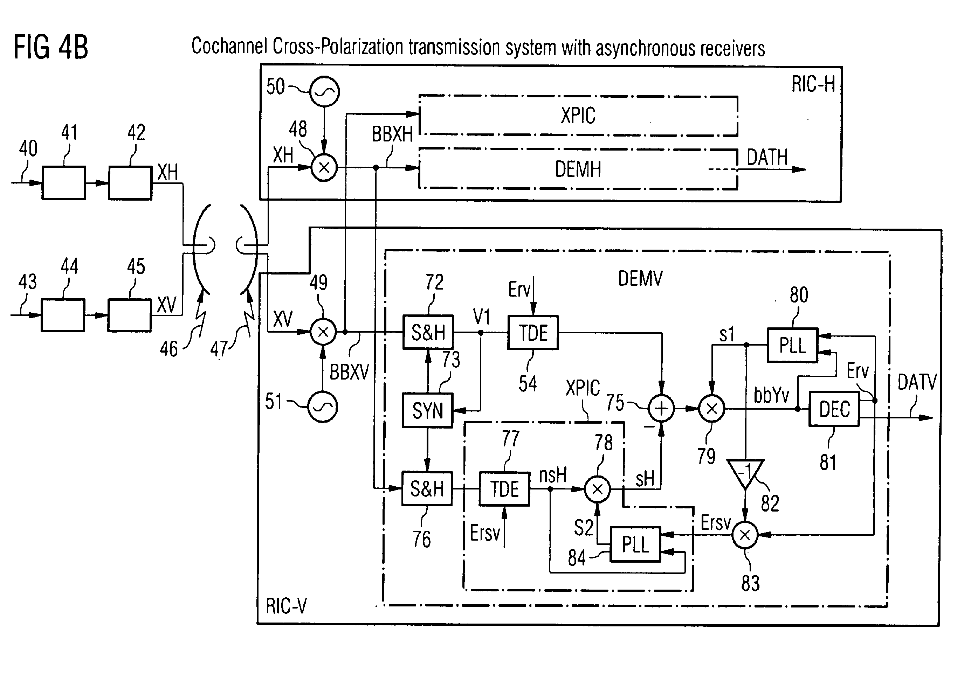

In the **figures 4a** and **4b** a cross-polarization transmission system constituted by a transmission and a receiving part and the respective antennas is represented; for simplicity only one way of transmission is depicted (subdivide in two figures for reason of drawing). For the sake of simplicity only one-way of transmission is shown. With reference to **fig.4a,** the transmission part includes two branches in correspondence of two independent data flows 40 and 43 applied at the input of two respective modulators 41 and 44 to obtain two modulated carriers which are sent to the inputs of two respective transmitters 42 and 45 connected to an antenna 46 operating in orthogonal polarization. Without limitation, the antenna transmits a first modulated carrier XH horizontally polarized and a second modulated carrier XV vertically polarized. A receiving antenna 47 receives the double polarized signals XH and XV and sent them separately to two respective receivers RIC-H and RIC-V. Although not expressly indicated in the figure, the two receivers also include the other typical circuits of a font-end, such as the image filter and a low-noise amplifier with automatic gain control.

The XH signal at the input of RIC-H represents the main signal for the receiver RIC-H, interfered by XV. The radiofrequency signal XH is sent to a mixer 48 pumped by a sinusoidal signal generated by a local oscillator 50 to be opportunely down-converted. According to an embodiment of the invention, the signal XH is converted from RF directly to baseband. According to an alternative embodiment of the invention, the frequency band of the signal XH is converted from RF to a predetermined band different from baseband but still compatible with speeds and input bandwidths of the commercial A/D converters. The down-converted signal is labelled BBXH. In the same manner the XV signal at the input of the receiver RIC-V represents the main signal for the receiver RIC-V, interfered by XH. The XV signal is sent to a mixer 49 pumped by a sinusoidal signal generated by a local oscillator 51 to be down-converted as previously said for XH. The down-converted signal is labelled BBXV. Differences between the desired band and the translation band of BBXH and BBXV are due to the tolerances of the oscillators 50 and 49. To take the cross-polar interference into account, so as to deliberately subtract it from the main signals, the two receivers have to be made aware of this type of interference. Two physical connections (cables) between the two receivers are provided for exchanging BBXH and BBXV signals between companion receivers for the aim of cancellation.

Returning to the description, and assuming, without limitation, a direct conversion from RF to baseband, the baseband signal BBXH reaches a sampler 52 controlled by a clock recovery circuit 53 fed by the samples at the output of the sampler 52 in a sort of synchronization loop. The BBXH samples are forwarded to the input of an equalizer 54. The control signal generated by the clock recovery circuit 53 is also sent to another sampler 56, to obtain samples of signal BBXV which are forwarded to the input of an equalizer 57. Advantageously, the two samplers 52 and 56 are followed by respective quantizing units of analog-to-digital converters (not shown) to continue in numerical fashion, but this is not strictly mandatory. The output of equalizer 54 is connected to an input of an adder 55 whose output is connected to an input of a multiplier 59. At the output of the multiplier 59 is present a signal bbYH, representing demodulated symbols applied to a decision circuit 61 and to an input of a first carrier recovery circuit 60 the multiplier 59 is part. The decider 61 provides an estimate DATH of the transmitted symbol (XH), and a square error Erh = |bbYH - DATH|$^2$ of said estimate applied respectively to: another input of the carrier recovery circuit 60, an input of a multiplier 63, and the equalizer 54. The carrier recovery circuit 60 outputs a signal s1 representing a carrier phase estimate referred to the BBXH signal. Technically speaking also the decider 61 can be considered part of the first carrier recovery circuit. The signal s1 is sent both to another input of the multiplier 59, which is part of the recovery loop, and to a phase inverter 62 before reaching another input of the multiplier 63. The output of the multiplier 63 is an error signal Ersh forwarded to an input of a second carrier recovery circuit 64 and to the equalizer 57.

On the interfering path the samples nsV at the output of the equalizer 57 are forwarded to an input of a multiplier 58 and to another input of the second carrier recovery circuit 64, which outputs towards another input of multiplier 58 a carrier phase estimate s2 referred to the BBXV interferent signal synchronized to the carrier phase of the BBXH signal. The phase s2 is the correction brought up to the phase of the samples nsV in order to obtain samples sV in-phase with the error Ersh. The output of the multiplier 58 is connected to a negated input of the adder 55 which subtracts in synchronous fashion the interference estimate sV from the main equalized signal, so as to cancel the cross-polar interference included therein. Technically speaking also the multiplier 58 and the decider 61 can be considered part of the second carrier recovery circuit.

The companion receiver RIC-V assigned to the vertical polarization is perfectly identical to RIC-H and the detailed description is the dual. The following numbers are used in **fig.4b** to indicate those RIC-V blocks corresponding in RIC-H: sampler of the main signal 72, sampler of the interferent signal 76, clock recovery and synchronizer 73, equalizer of the main signal 74, equalizer of the interferent signal 77, first multiplier 78, adder (subtractor) 75, second multiplier 79, decision circuit 81, first carrier recovery circuit 80, phase inverter 82, and third multiplier 83. RIC-V signals: V1, bbYv, Erv, Ersv, nsH, sH, and DATV are equivalent to the RIC-H signals, in the order: H1, bbYh, Erh, Ersh, nsV, sV, and DATH.

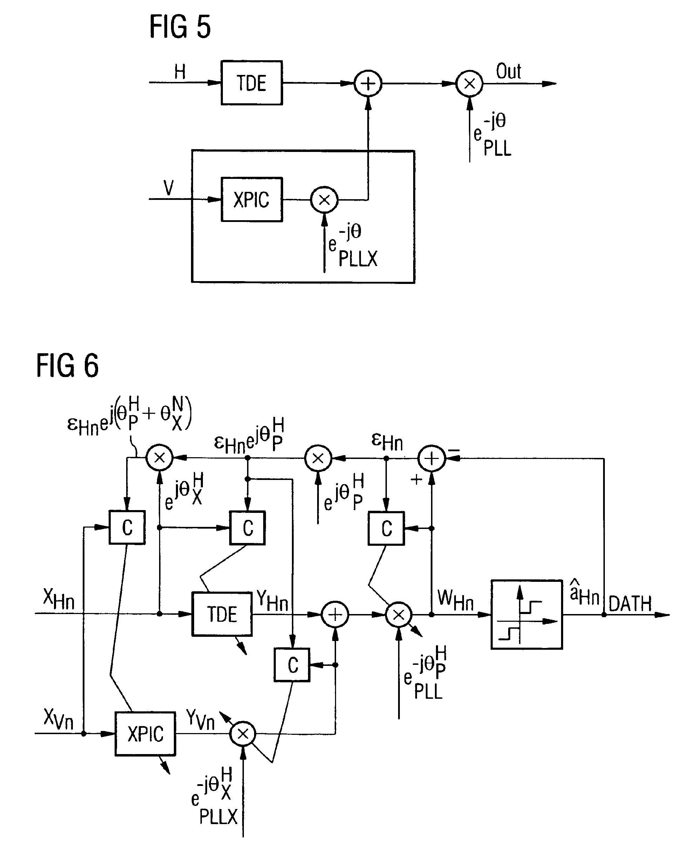

The operation of the receivers is illustrated with the help of the **figures 5 and 6**. In **fig.5** a very simplified model of the receiver is presented. In this figure:

- the block "TDE" represents a "Time Domain Equalizer", similar to the 54, 57, 74, and 77 (fig.4a, 4b), often used in radio links schemes to face the signal degradation due to multipath fading. TDE has been included for completeness, although its design has non impact with the proposed invention.

- The bottom block in the figure represents an XPIC improved by the invention.

The outputs of the two digital PLLs (DPLL) used to recovery the main and the interferent carriers are represented by the two vectors $e_{PLL}^{-j\theta}$ and $e_{PLLX}^{-j\theta}$. According to the invention, the XPIC device is provided with a second carrier recovery loop that "follows" the XPIC. The XPIC provides an esteem of the interference caused by the other polarization that is "still asynchronous" with the actual interference itself but synchronized at the output of the XPIC with the actual interference, permitting a complete cancellation by a simple subtraction. The phase inverters 62 and 82 synchronize the interferent to the main signal at the input of the adders (subtractors) 55 and 75. As a design rule the coefficients of the equalizers across the main path (54, 74) are initially set to obtain the maximum level at the output of the equalizer; the opposite is true for the initial coefficients of the equalizers across the interferent path (57, 77). This prevents the subtraction node from an excessive interference level not more cancellable by the decider error Erh (N.B.: C/I = 15 dB is the minimum value foreseen by the specifications but the system of the invention outperforms this value).

In **fig.6** a more detailed scheme is presented. With reference to this figure, the input-output relationship in TDE and XPIC objects is (the asterisk indicates complex conjugate):

$$y_{Hn} = \sum_{-(N-1)/2}^{(N-1)/2} c_{Hj} x_{H(n-j)}^*$$

$$y_{Vn} = \sum_{-(N-1)/2}^{(N-1)/2} c_{Vj} x_{V(n-j)}^*$$

Coefficients $C_H$ and the phases $\theta_P^H$ and $\theta_X^H$ are time-adjusted by the square "C" blocks, implemented at the destinations indicated by oblique lines, in the following way:

$$q_{n+1} = q_n - \alpha \kappa_n$$

where $q_n$ generically represents the n-istant value of every one of the above parameters. The proportionality term $\alpha$ is called step-size in the steepest descending gradient method. In order to calculate the receiver error $\varepsilon_n = |W_{Hn} - \hat{a}_{Hn}|^2$ (is the error Erh), the decider DEC decides the transmitted symbol $\alpha_n$ from its estimate $\hat{\alpha}_n$ Scalar $\kappa_n$ is the derivative of the square error Erh respect the generic parameter $\varphi_n$ to be adjusted:

$$\kappa_n = \frac{J[|\varepsilon|^2]}{J\varphi_n}.$$ Starting from $\chi_{Hn}$ and $\chi_{Vn}$ the

mathematical relationships leading to the output are immediately calculable in figure.

In addition to the mathematical operations indicated in fig.6, further bibliographic reference are given hereafter of the main functional blocks used to implement the receivers RIC-H and RIC-V. The references reported in the cited prior art to build up the receivers of fig.3 are also generally valid for the receivers of fig.4a and 4b. Furthermore, the symbol recovery and sampling loop theory concerning blocks 53, 52, 56 and 73, 72, 76 is described in: a) Meyr, Moeneclaey, Fechtel "Digital Communication Receivers"; b) Wiley Floyd M. Gardner "A BPSK/QPSK Timing-Error Detector for Sampled Receivers," IEEE Trans. Comm., May 1986; c) J.G. Proakis "Digital Communications", 4th Edition, Chapter 6. The adaptive equalizer theory basilar to the design of blocks 54, 57, 74, and 77 is described in J.G. Proakis, "Digital Communications", 4th Edition, Chapter 11. The carrier recovery loop theory for the design of blocks 59, 60, 61 - 58, 64, 61 - 79,80,81 - 78, 84, 81 is described in J.G. Proakis together with symbol recovery. According to the cited references, once the phase and symbol synchronisations are obtained, the received waveform $r(t)$ is converted into M-dimensional waveforms $s(t)$ characterizing the transmitted symbols. This is performed by the demodulator through a correlation process between $r(t)$ and $s(t)$. AWGN noise and ISI which corrupt the received signal, introduce uncertainty in the demodulated constellation. Determining which of the M possible symbols was effectively transmitted on the basis of the received sequence $r(t)$ is the specific task of the decision process aimed to minimize the probability of error. Due to the random nature of the noise, the decider adopts statistic criteria which lead to maximize a Likelihood function equivalent to finding the signal which minimizes the Euclidian distance, called metric, between $r(t)$ and the ideal $s(t)$. Maximum-Likelihood sequence estimate can be performed symbol-by-symbol or most profitably in case of modulation with memory by means of the Viterbi algorithm. As the TDE equalizers are concerned, they are schematized by a FIR filter whose coefficients (taps) delayed 1/T represent the ISI included in the band-limited non-ideal channels. The MSE criterion is used to adaptively update the coefficients of the FIR in order to compensate for the ISI.

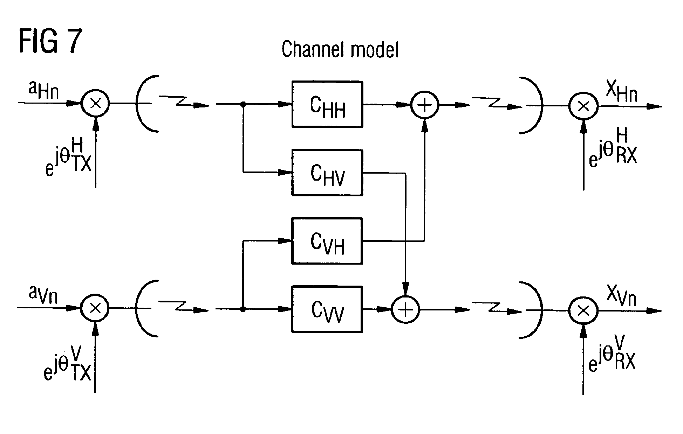

In **fig.7** a model of the cross polarization transmission channel from the transmitters to the receivers is depicted. The model has been used to simulate the behaviour of the system of the present invention with different C/I values. In the figure we can notice:

1) the transmitter local oscillators, represented by the complex exponentials $e^{j\theta_{TX}^H}$ and $e^{j\theta_{TX}^V}$;

2) the receiver local oscillators, represented by the complex exponentials $e^{j\theta_{RX}^H}$ and $e^{j\theta_{RX}^V}$;

3) the direct and transverse channel transfer functions, represented by the square blocks $C_{(H\ or\ V)(H\ or\ V)}$;

4) $a_{(HorV)n}$ are the transmitted symbols, and $x_{(HorV)n}$ are the baseband (after the RX local oscillators) received symbols.

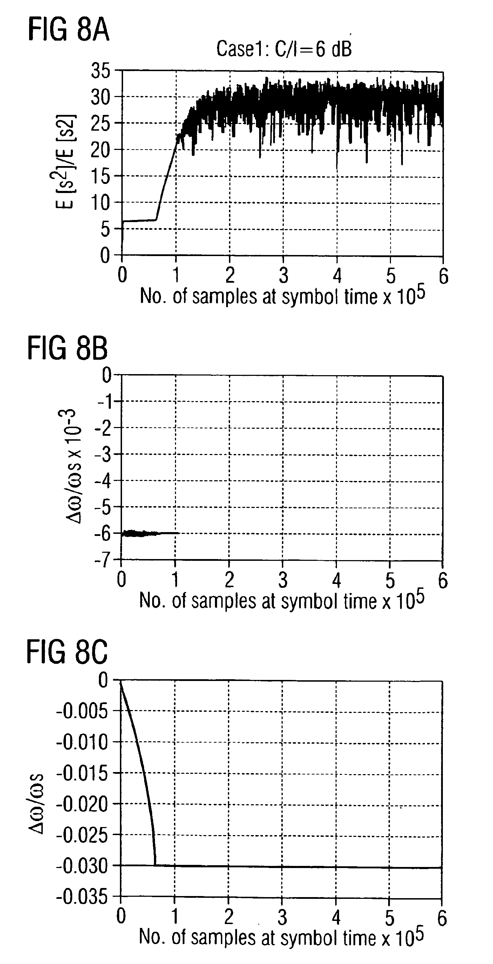

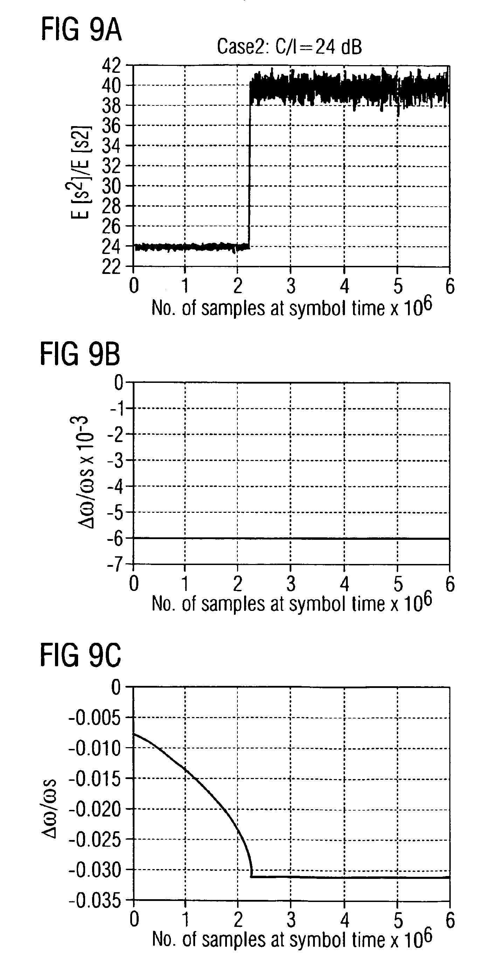

The modulation format of symbols $\alpha_{(HorV)n}$ is 32 QAM, the global filtering on the channel is represented by a raised cosine filter with roll-off=0.5; said fs the symbol frequency, the frequency difference between the TX and RX oscillators on the same polarization is posed to 0.006*fs, and the frequency difference between RX oscillators themselves (i.e. between the H local oscillator 50 and the V local oscillator 51 in RX) is 0.03*fs. The reported cases differ for the value of $C_{HH}/C_{HV} = C_{VV}/C_{VH}$, said also C/I ratio. The simulation results for C/I = 6 dB (Case 1) are reported in the **figures 8a, 8b,** and **8c,** while the simulation results for C/I = 24 dB (Case 2) are reported in the **figures 9a, 9b,** and **9c.**

Case n. 1 : C/I = 6 dB.

In **fig.8a** the signal to mean square error of the system is reported. In **fig.8b** and **8c** the values of the derivative respect to the time of the $\theta_{PLL}^{H_P}$ and $\theta_{PLLX}^{H_P}$ phases, normalized to the symbol pulsation $\omega_s = 2\pi f_s$ ($f_s$ is the symbol frequency) are respectively reported.

Case n. 2 : C/I = 24 dB.

In **fig.9a** the signal to mean square error of the system is reported. In **fig.9b** and **9c** the values of the derivative respect to the time of the $\theta_{PLL}^{\frac{H}{P}}$ and

$\theta_{PLLX}^{\frac{H}{P}}$ phases, normalized to the symbol pulsation $\omega_s = 2\pi f_s$ are respectively reported.

**Claims**

1. A cross-polarization transmission system comprising two transmitters (42, 45) of signals (XH, XV) orthogonally polarized on a common frequency channel and two receivers (RIC-H, RIC-V) for receiving a respective one of said signals mutually interfering on said channel, wherein each receiver includes:

   - a frequency converter (48, 49) controlled by a local oscillator (50, 51) for down-converting the reception signal (XH, XV) from radiofrequency to a predetermined band;
   - a first equalizer (54, 74) in cascade to said first frequency converter (48, 49);
   - a second equalizer (57, 77) for receiving an asynchronous interferent signal (XV, XH) in said predetermined band from the companion receiver;
   - a first multiplier (58, 78) in cascade to said second equalizer (57, 77);
   - subtraction means (55, 75) for subtracting the output signal of said first multiplier (58, 78) from the output signal of said first equalizer (54, 74);
   - a second multiplier in (59, 79) cascade to said subtraction means (55, 75);
   - a decider circuit (61, 81) in cascade to said second multiplier (59, 79) for providing an estimate (DATH, DATV) of said transmitted signal (XH, XV) and a signal corresponding to the square error (Erh, Erv) of said estimate compared to the ideal value;
   - a first carrier recovery circuit (60, 80) for receiving the output signal (bbYh, bbYv) of said second multiplier and said signal corresponding to the square error (Erh, Erv) and providing a signal (s1) to said second multiplier (59, 79) and to a phase inverter (62, 82);
   - a third multiplier (63, 83) in cascade to said phase inverter (62, 82) and further receiving said signal corresponding to the square error (Erh, Erv);
   - a second carrier recovery circuit (64, 84) for receiving the output signal of said third multiplier (Ersh, Ersv) and a signal coming out from said second equalizer (nsV, nsH) and providing a signal (s2) to said first multiplier (58, 78).

2. The system of the claim 1, **characterized in that** said local oscillator (50, 51) and said frequency converter (48, 49) is arranged for down-converting the reception signal (XH, XV) from radiofrequency directly to baseband.

3. The system of the claim 1 or 2, **characterized in that** includes a first sampler (52, 72) upstream said first equalizer (54, 74) and a second sampler (56, 76) upstream said second equalizer (57, 77).

4. The system of the claim 3, **characterized in that** includes a first quantization unit followed by a first digital converter in cascade to said first sampler (52, 72) and a second quantization unit followed by a second digital converter in cascade to said second sampler (56, 76).

5. The system of the claim 3 or 4, **characterized in that** said first sampler (52, 72) is looped with a symbol synchronization recovery circuit (53, 73) which also controls the second sampler (56, 76).

6. The system of any preceding claim, **characterized in that** said first equalizer (54, 74) and said second equalizer (57, 77) are passband operated.

7. Method for receiving orthogonally polarized signals mutually interfering on a common frequency channel, including the steps of:

   - down converting (48, 49) a main reception signal (XH, XV) from radiofrequency to a predetermined band by means of a first local oscillator (50, 51);
   - equalizing (54, 74) the main down-converted signal (BBXH, BBXV);
   - down converting (49, 48) a cross-polar interferent signal (XV, XH) from radiofrequency to said predetermined band by means of a second local oscillator (51, 50);
   - equalizing (57, 77) the down-converted interferent signal (BBXV, BBXH);
   - multiplying said equalized interferent signal (nsV, nsH) by a first signal (s2);
   - subtracting (55, 75) the equalized interferent signal (sV, sH) multiplied by the first signal from the main equalized signal;
   - multiplying the subtraction signal by a second signal (s1);
   - determining an estimated signal (DATH, DATV) of the main signal (XH, XV) and a signal corresponding to the squared error (Erh, Erv) of said estimated signal compared to the ideal value based on the subtraction signal multiplied by the second signal (s1);
   - generating said second signal (s1) by means of a first recovery loop (60, 80) operating on the basis of said squared error (Erh, Erv) and the phase of said subtraction signal multiplied by the second signal (s1);
- inverting the phase of said second signal (s1) and multiplying by said squared error (Erh, Erv);
- generating said first signal (s2) by means of a second recovery loop (64, 84) operating on the basis of the phase of said equalized interferent signal (nsV, nsH) and said squared error (Erh, Erv) multiplied by the second signal (s1) with inverted phase (Ersh, Ersv).

**Patentansprüche**

1. Kreuzpolarisationsübertragungssystem mit zwei Sendern (42, 45) von auf einem gemeinsamen Frequenzkanal orthogonal polarisierten Signalen (XH, XV) und zwei Empfängern (RIC-H, RIC-V) zum Empfangen eines jeweiligen der Signale, die auf dem Kanal gegenseitig interferieren, wobei jeder Empfänger Folgendes umfasst:

   - einen durch einen Lokaloszillator (50, 51) gesteuerten Frequenzumsetzer (48, 49) zum Herabmischen des Empfangssignals (XH, XV) aus Hochfrequenz in ein vorbestimmtes Band;
   - einen ersten Entzerrer (54, 74) in Kaskadenschaltung zu dem ersten Frequenzumsetzer (48, 49);
   - einen zweiten Entzerrer (57, 77) zum Empfangen eines asynchronen interferenten Signals (XV, XH) in dem vorbestimmten Band von dem Begleiterempfänger;
   - einen ersten Multiplizierer (58, 78) in Kaskadenschaltung zu dem zweiten Entzerrer (57, 77);
   - Subtraktionsmittel (55, 75) zum Subtrahieren des Ausgangssignals des ersten Multiplizierers (58, 78) von dem Ausgangssignal des ersten Entzerrers (54, 74);
   - einen zweiten Multiplizierer (59, 79) in Kaskadenschaltung zu den Subtraktionsmitteln (55, 75);
   - eine Entscheidungsschaltung (61, 81) in Kaskadenschaltung zu dem zweiten Multiplizierer (59, 79) zum Bereitstellen einer Schätzung (DATH, DATV) des gesendeten Signals (XH, XV) und eines Signals, das dem quadratischen Fehler (Erh, Erv) der Schätzung im Vergleich zu dem Idealwert entspricht;
   - eine erste Trägerwiedergewinnungsschaltung (60, 80) zum Empfangen des Ausgangssignals (bbYh, bbYv) des zweiten Multiplizierers und des Signals, das dem quadratischen Fehler (Erh, Erv) entspricht, und zum Leiten eines Signals (s1) zu dem zweiten Multiplizierer (59, 79) und zu einem Phaseninvertierer (62, 82);
   - einen dritten Multiplizierer (63, 83) in Kaskadenschaltung zu dem Phaseninvertierer (62, 82) und ferner zum Empfangen des Signals, das dem quadratischen Fehler (Erh, Erv) entspricht;
   - eine zweite Trägerwiedergewinnungsschaltung (64, 84) zum Empfangen des Ausgangssignals des dritten Multiplizierers (Ersh, Ersv) und eines aus dem zweiten Entzerrer (nsV, nsH) kommenden Signals und zum Leiten eines Signals (s2) zu dem ersten Multiplizierer (58, 78).

2. System nach Anspruch 1, **dadurch gekennzeichnet, dass** der Lokaloszillator (50, 51) und der Frequenzumsetzer (48, 49) dafür ausgelegt sind, das Empfangssignal (XH, XV) aus Hochfrequenz direkt in das Basisband herabzumischen.

3. System nach Anspruch 1 oder 2, **dadurch gekennzeichnet, dass** es einen ersten Sampler (52, 72) signalaufwärts des ersten Entzerrers (54, 74) und einen zweiten Sampler (56, 76) signalaufwärts des zweiten Entzerrers (57, 77) umfasst.

4. System nach Anspruch 3, **dadurch gekennzeichnet, dass** es Folgendes umfasst: eine erste Quantisierungseinheit, gefolgt durch einen ersten digitalen Umsetzer in Kaskadenschaltung zu dem ersten Sampler (52, 72) und eine zweite Quantisierungseinheit, gefolgt durch einen zweiten digitalen Umsetzer in Kaskadenschaltung zu dem zweiten Sampler (56, 76).

5. System nach Anspruch 3 oder 4, **dadurch gekennzeichnet, dass** der erste Sampler (52, 72) mit einer Symbolsynchronisations- Wiedergewinnungsschaltung (53, 73), die auch den zweiten Sampler (56, 76) steuert, in Schleife geschaltet ist.

6. System nach einem der vorhergehenden Ansprüche, **dadurch gekennzeichnet, dass** der erste Entzerrer (54, 74) und der zweite Entzerrer (57, 77) durchlassbandbetrieben sind.

7. Verfahren zum Empfangen von gegenseitig auf einem gemeinsamen Frequenzkanal interferierenden orthogonal polarisierten Signalen, mit den folgenden Schritten:

   - Herabmischen (48, 49) eines Hauptempfangssignals (XH, XV) aus Hochfrequenz in ein vorbestimmtes Band mittels eines ersten Lokaloszillators (50, 51);
   - Entzerren (54, 74) des herabgemischten Hauptsignals (BBXH, BBXV);
   - Herabmischen (49, 48) eines kreuzpolaren interferenten Signals (XV, XH) aus Hochfrequenz in das vorbestimmte Band mittels eines zweiten Lokaloszillators (51, 50);
   - Entzerren (57, 77) des herabgemischten interferenten Signals (BBXV, BBXH);

- Multiplizieren des entzerrten interferenten Signals (nsV, nsH) mit einem ersten Signal (s2);
- Subtrahieren (55, 75) des mit dem ersten Signal multiplizierten entzerrten interferenten Signals (sV, sH) von dem entzerrten Hauptsignal;
- Multiplizieren des Subtraktionssignals mit einem zweiten Signal (s1) ;
- Bestimmen eines geschätzten Signals (DATH, DATV) des Hauptsignals (XH, XV) und eines Signals, das dem quadrierten Fehler (Erh, Erv) des geschätzten Signals im Vergleich zu dem Idealwert entspricht, auf der Basis des mit dem zweiten Signal (s1) multiplizierten Subtraktionssignals;
- Erzeugen des zweiten Signals (s1) mittels einer ersten Wiedergewinnungsschleife (60, 80), die auf der Basis des quadrierten Fehlers (Erh, Erv) und der Phase des Subtraktionssignals, multipliziert mit dem zweiten Signal (s1), operiert;
- Invertieren der Phase des zweiten Signals (s1) und Multiplizieren mit dem quadrierten Fehler (Erh, Erv);
- Erzeugen des ersten Signals (s2) mittels einer zweiten Wiedergewinnungsschleife (64, 84), die auf der Basis der Phase des entzerrten interferenten Signals (nsV, nsH) und des quadrierten Fehlers (Erh, Erv), multipliziert mit dem zweiten Signal (s1) mit invertierter Phase (Ersh, Ersv), operiert.

## Revendications

1.  Système de transmission à polarisation croisée comprenant deux émetteurs (42, 45) de signaux (XH, XV) orthogonalement polarisés sur un canal de fréquence commun et deux récepteurs (RIC-H, RIC-V) pour recevoir l'un respectif desdits signaux interférant mutuellement sur ledit canal, dans lequel chaque récepteur inclut :

    - un convertisseur de fréquences (48, 49) commandé par un oscillateur local (50, 51) pour convertir à la baisse le signal de réception (XH, XV) d'une radiofréquence à une bande prédéterminée ;
    - un premier égaliseur (54, 74) en cascade avec ledit premier convertisseur de fréquences (48, 49) ;
    - un deuxième égaliseur (57, 77) pour recevoir un signal interférent asynchrone (XV, XH) dans ladite bande prédéterminée du récepteur compagnon ;
    - un premier multiplicateur (58, 78) en cascade avec ledit deuxième égaliseur (57, 77) ;
    - un moyen de soustraction (55, 75) pour soustraire le signal de sortie dudit premier multiplicateur (58, 78) du signal de sortie dudit premier égaliseur (54, 74) ;
    - un deuxième multiplicateur (59, 79) en cascade avec ledit moyen de soustraction (55, 75) ;
    - un circuit décideur (61, 81) en cascade avec ledit deuxième multiplicateur (59, 79) pour délivrer une estimation (DATH, DATV) dudit signal (XH, XV) transmis et un signal correspondant à l'erreur au carré (Erh, Erv) de ladite estimation par rapport à la valeur idéale ;
    - un premier circuit de récupération de porteuse (60, 80) pour recevoir le signal de sortie (bbYh, bbYv) dudit deuxième multiplicateur et ledit signal correspondant à l'erreur au carré (Erh, Erv) et délivrer un signal (s1) audit deuxième multiplicateur (59, 79) et à un inverseur de phase (62, 82) ;
    - un troisième multiplicateur (63, 83) en cascade avec ledit inverseur de phase (62, 82) et recevant en outre ledit signal correspondant à l'erreur au carré (Erh, Erv) ;
    - un deuxième circuit de récupération de porteuse (64, 84) pour recevoir le signal de sortie dudit troisième multiplicateur (Ersh, Ersv) et un signal sortant dudit deuxième égaliseur (nsV, nsH) et délivrant un signal (s2) audit premier multiplicateur (58, 78).

2.  Système selon la revendication 1, **caractérisé en ce que** ledit oscillateur local (50, 51) et ledit convertisseur de fréquences (48, 49) sont agencés de façon à convertir à la baisse le signal de réception (XH, XV) d'une radiofréquence directement à la bande de base.

3.  Système selon la revendication 1 ou 2, **caractérisé en ce qu'**il inclut un premier échantillonneur (52, 72) en amont dudit premier égaliseur (54, 74) et un deuxième échantillonneur (56, 76) en amont dudit deuxième égaliseur (57, 77).

4.  Système selon la revendication 3, **caractérisé en ce qu'**il inclut une première unité de quantification suivie d'un premier convertisseur numérique en cascade avec ledit premier échantillonneur (52, 72) et une deuxième unité de quantification suivie d'un deuxième convertisseur numérique en cascade avec ledit deuxième échantillonneur (56, 76).

5.  Système selon la revendication 3 ou 4, **caractérisé en ce que** ledit premier échantillonneur (52, 72) est en boucle avec un circuit de récupération de synchronisation de symboles (53, 73) qui commande également le deuxième échantillonneur (56, 76).

6.  Système selon une quelconque revendication précédente, **caractérisé en ce que** ledit premier égaliseur (54, 74) et ledit deuxième égaliseur (57, 77) sont exploités en bande passante.

7.  Procédé de réception de signaux orthogonalement polarisés interférant mutuellement sur un canal de fréquence commun, incluant les étapes de :

    - conversion à la baisse (48, 49) d'un signal de réception principal (XH, XV) d'une radiofréquence à une bande prédéterminée au moyen d'un premier oscillateur local (50, 51) ;
    - égalisation (54, 74) du signal principal converti à la baisse (BBXH, BBXV) ;
    - conversion à la baisse (49, 48) d'un signal interférent de polarisation croisée (XV, XH) d'une radiofréquence à ladite bande prédéterminée au moyen d'un deuxième oscillateur local (51, 50) ;
    - égalisation (57, 77) du signal interférent converti à la baisse (BBXV, BBXH) ;
    - multiplication dudit signal interférent égalisé (nsV, nsH) par un premier signal (s2) ;
    - soustraction (55, 75) du signal interférent égalisé (sV, sH) multiplié par le premier signal du signal principal égalisé ;
    - multiplication du signal de soustraction par un deuxième signal (s1) ;
    - détermination d'un signal estimé (DATH, DATV) du signal principal (XH, XV) et d'un signal correspondant à l'erreur au carré (Erh, Erv) dudit signal estimé par rapport à la valeur idéale sur la base du signal de soustraction multiplié par le deuxième signal (s1) ;
    - génération dudit deuxième signal (s1) au moyen d'une première boucle de récupération (60, 80) opérant sur la base de ladite erreur au carré (Erh, Erv) et de la phase dudit signal de soustraction multiplié par le deuxième signal (s1) ;
    - inversion de la phase dudit deuxième signal (s1) et multiplication par ladite erreur au carré (Erh, Erv) ;
    - génération dudit premier signal (s2) au moyen d'une deuxième boucle de récupération (64, 84) opérant sur la base de la phase dudit signal interférent égalisé (nsV, nsH) et de ladite erreur au carré (Erh, Erv) multipliée par le deuxième signal (s1) avec une phase inversée (Ersh, Ersv).

# FIG 1

Cochannel Cross-Polarization transmission system
with synchronous receivers (known art)

FIG 2

Synchronous REC-H-B receiver (Fig 1)

REC-H-B

RX-H-B(f1)

BPF

LNA

RF/IF

MX1

IF$_H$

to REC-V-B

OLRX-B

DEMOD-H-B

IF/BB
MXH

BBH

VCO

BBP-H

S&H,
A/D, LPF
SYM-R

+

−

ATDE

DECID

D1a

MXV

BBV

BBP-V

S&H,
A/D, LPF
SYM-R

XPIC

ER

CTRL

IF$_V$

D2a

{from REC-V-B}

# FIG 3

Cochannel Cross-Polarization transmission system with asynchronous receivers (known art)

EP 1 708 381 B1

**FIG 4A** Cochannel Cross-Polarization transmission system with asynchronous receivers

EP 1 708 381 B1

# FIG 4B

Cochannel Cross-Polarization transmission system with asynchronous receivers

## FIG 5

## FIG 6

FIG 7

Channel model

$a_{Hn}$ ⊗ $e^{j\theta_{TX}^H}$ ( $C_{HH}$ $C_{HV}$ $C_{VH}$ $C_{VV}$ + ) ⊗ $e^{j\theta_{RX}^H}$ $X_{Hn}$

$a_{Vn}$ ⊗ $e^{j\theta_{TX}^V}$ ⊗ $e^{j\theta_{RX}^V}$ $X_{Vn}$

## FIG 8A

Case1: C/I=6 dB

## FIG 8B

## FIG 8C

## FIG 9A

Case2: C/I=24 dB

## FIG 9B

## FIG 9C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1365519 A1

**Non-patent literature cited in the description**

- **JOHN G. PROAKIS.** Digital Communications. Mc-Graw-Hill, 2001
- **MEYR ; MOENECLAEY ; FECHTEL.** *Digital Communication Receivers*
- A BPSK/QPSK Timing-Error Detector for Sampled Receivers. **WILEY FLOYD M. GARDNER.** IEEE Trans. Comm. May 1986
- **J.G. PROAKIS.** Digital Communications